# EUROPÄISCHE PATENTSCHRIFT

(11) **EP 3 360 622 B1**
(45) Veröffentlichungstag und Bekanntmachung des Hinweises auf die Patenterteilung: **04.11.2020**
(21) Anmeldenummer: 17155857.0
(22) Anmeldetag: 13.02.2017
(51) Int. Cl.: B21J 9/20, B21K 1/06, B21C 23/18, B21C 31/00, B21J 5/12, B21K 1/30

(54) **FERTIGUNGSVERFAHREN UMD UMFORMMASCHINE ZUM UMFORMEN VORZUGSWEISE METALLISCHER WERKSTÜCKE DURCH FLIESSPRESSEN**
METHOD OF MANUFACTURING AND FORMING MACHINE FOR FORMING IN PARTICULAR METALLIC WORKPIECES BY EXTRUSION
PROCÉDÉ DE FABRICATION ET MACHINE DE FORMAGE POUR LA FORMATION DES PIÈCES EN PARTICULIER MÉTALLIQUES PAR EXTRUSION

(43) Veröffentlichungstag der Anmeldung: 15.08.2018
(73) Patentinhaber: FELSS Systems GmbH, 75203 Königsbach-Stein (DE)
(72) Erfinder: Heinrichs, Serjosha, 75177 Pforzheim (DE); Beihofer, Dennis, 75236 Kämpfelbach (DE); Dr. Marré, Michael, 76189 Karlsruhe (DE); Dr. Kluge, Matthias, 75248 Dürrn (DE)
(74) Vertreter: Kohler Schmid Möbus Patentanwälte

(56) Entgegenhaltungen:
- WO-A1-2008/017358
- DE-A1-102010 017 592
- DE-A1-102012 101 952
- US-A1- 2008 115 552

## Beschreibung

Die Erfindung betrifft ein Fertigungsverfahren,
- im Rahmen dessen ein vorzugsweise metallisches Werkstück durch Fließpressen umgeformt wird, indem eine an einem Umformwerkzeug zum Umformen vorzugsweise metallischer Werkstücke vorgesehene formgebende Verzahnung und das mit der formgebenden Verzahnung in Kontakt befindliche Werkstück relativ zueinander mit einem Hub längs einer Bewegungsbahn bewegt werden und
- im Rahmen dessen ein Verfahren zur Überwachung des Funktionszustands der formgebenden Verzahnung durchgeführt wird, wobei während eines Hubs, welchen die formgebende Verzahnung und wenigstens ein mittels der formgebenden Verzahnung umzuformendes und mit der formgebenden Verzahnung in Kontakt befindliches Werkstück relativ zueinander längs einer Bewegungsbahn ausführen, zu zeitlich gegeneinander versetzten Messzeitpunkten jeweils eine aufgrund des Hubs auf die formgebende Verzahnung wirkende Verzahnungskraft gemessen wird.

Die Erfindung betrifft des Weiteren eine Umformmaschine zum Umformen vorzugsweise metallischer Werkstücke durch Fließpressen, mit einem eine formgebende Verzahnung aufweisenden Umformwerkzeug, mit einem Umformantrieb, welcher dazu ausgebildet ist, die formgebende Verzahnung des Umformwerkzeugs und ein mittels der formgebenden Verzahnung umzuformendes und mit der formgebenden Verzahnung in Kontakt befindliches Werkstück relativ zueinander mit einem Hub längs einer Bewegungsbahn zu bewegen, sowie mit einer Vorrichtung zur Überwachung des Funktionszustands der formgebenden Verzahnung an dem Umformwerkzeug, wobei die Vorrichtung zur Überwachung des Funktionszustands der formgebenden Verzahnung des Umformwerkzeugs eine Messvorrichtung aufweist, die dazu ausgebildet ist, während eines Hubs, welchen die formgebende Verzahnung und ein mittels der formgebenden Verzahnung umzuformendes und mit der formgebenden Verzahnung in Kontakt befindliches Werkstück relativ zueinander längs einer Bewegungsbahn ausführen, zu zeitlich gegeneinander versetzten Messzeitpunkten jeweils eine aufgrund des Hubs auf die formgebende Verzahnung wirkende Verzahnungskraft zu messen.

Die gattungsgemäße US 2008/0115552 A1 offenbart eine Maschine, mittels derer an einer Welle durch Fließpressen eine Verzahnung erzeugt wird. Zu diesem Zweck wird eine mit einer formgebenden Verzahnung versehene Matrize auf die zu bearbeitende Welle aufgeschoben. Der Vorschub der Matrize wird dabei mittels eines Frequenzmodulators derart gestaltet, dass die Matrize längs der Vorschubachse eine oszillierende Bewegung ausführt. Die zur Umformung der Welle aufzubringende Vorschubkraft wird während eines frequenzmodulierten Umformhubs fortlaufend gemessen und ist in Figuren der Vorveröffentlichung graphisch dargestellt.

Im Falle des aus der Praxis bekannten Standes der Technik werden formgebende Verzahnungen an Umformmatrizen auf Zahnbruch und Zahnverschleiß überwacht. Zu diesem Zweck werden an einer zu überwachenden Umformmatrize die an dieser bei der Werkstückbearbeitung wirksamen Verzahnungskräfte mittels eines einzelnen Kraftsensors erfasst. Durch eine numerische Auswertung der von dem einzelnen Sensor gemessenen Verzahnungskräfte wird auf den Funktionszustand der überwachten Verzahnung geschlossen.

Die Zuverlässigkeit der Werkzeugüberwachung gegenüber dem Stand der Technik zu verbessern, ist Aufgabe der vorliegenden Erfindung.

Erfindungsgemäß gelöst wird diese Aufgabe durch das Verfahren gemäß Patentanspruch 1 und durch die Umformmaschine gemäß Patentanspruch 10.

Im Falle der Erfindung werden zu zeitlich gegeneinander versetzten Messzeitpunkten die Verzahnungskräfte, die an der formgebenden Verzahnung eines Umformwerkzeugs auftreten, wenn die formgebende Verzahnung und ein umzuformendes Werkstück relativ zueinander einen Hub ausführen, nicht nur an einer sondern vielmehr an mehreren Messstellen an der formgebenden Verzahnung bestimmt. Erfindungsgemäß erfolgt demnach eine räumliche Auflösung der auftretenden Verzahnungskräfte. Die Messstellen sind räumlich gegeneinander versetzt und können unmittelbar an der formgebenden Verzahnung angeordnet sein, sind aber vorzugsweise von der formgebenden Verzahnung beabstandet.

Für jede der Messstellen an der formgebenden Verzahnung wird zu jedem der zeitlich gegeneinander versetzten Messzeitpunkte eine momentane lokale Verzahnungskraft bestimmt. Die für eine Messstelle zu einem früheren Messzeitpunkt bestimmte frühere momentane lokale Verzahnungskraft und die für dieselbe Messstelle zu einem späteren Messzeitpunkt bestimmte spätere momentane lokale Verzahnungskraft werden jeweils miteinander in Beziehung gesetzt. Anhand der Beziehung zwischen der früheren momentanen lokalen Verzahnungskraft und der späteren momentanen lokalen Verzahnungskraft wird für jede der Messstellen an der formgebenden Verzahnung eine dieser Messstelle zugeordnete und für den Funktionszustand der formgebenden Verzahnung spezifische lokale Zustandskenngröße bestimmt. Die Messzeitpunkte werden vorzugsweise derart gewählt, dass von dem von der formgebenden Verzahnung und dem zu bearbeitenden Werkstück relativ zueinander ausgeführten Hub eine oder mehrere Phasen erfasst werden, welche für den Funktionszustand der formgebenden Verzahnung besonders aussagekräftig sind. Welche Phasen des Hubs von formgebender Verzahnung und Werkstück insoweit geeignet sind, kann im Vorfeld eines konkreten Überwachungsprozesses beispielsweise empirisch ermittelt werden. Zur Bestimmung der spezifischen lokalen Zustandskenngrößen können aufeinanderfolgende momentane lokale Verzahnungskräfte - insbesondere aufeinanderfolgende momentane lokale Verzahnungskräfte während eines Zeitintervalls, in welchem die formgebende Verzahnung und das umzuformende Werkstück einen für den Funktionszustand der formgebenden Verzahnung besonders aussagekräftigen Teil des Hubes ausführen - für jede der Messstellen fortlaufend ermittelt und miteinander in Beziehung gesetzt werden. Aus den für die verschiedenen Messstellen an der formgebenden Verzahnung bestimmten lokalen Zustandskenngrößen wird schließlich der Funktionszustand der formgebenden Verzahnung hergeleitet. Dabei kann für jede der Messstellen eine einzelne lokale Zustandskenngröße aber auch eine Mehrzahl von lokalen Zustandskenngrößen berücksichtigt werden.

Besondere Ausführungsarten des Verfahrens gemäß Patentanspruch 1 und der Umformmaschine gemäß Patentanspruch 10 ergeben sich aus den abhängigen Patentansprüchen 2 bis 9 und 11 bis 13.

Ausweislich Patentanspruch 2 wird in bevorzugter Ausgestaltung der Erfindung als Funktionszustand der formgebenden Verzahnung das Vorhandensein eines Zahnbruchs an der formgebenden Verzahnung und/oder der Verschleißzustand der formgebenden Verzahnung überwacht.

Gemäß Patentanspruch 3 wird im Falle der Erfindung der Funktionszustand der formgebenden Verzahnung anhand der Verzahnungskräfte überwacht, die wirksam sind, wenn die formgebende Verzahnung und das umzuformende Werkstück mit einem Arbeitshub relativ zueinander bewegt werden und/oder wenn die formgebende Verzahnung und das umzuformende Werkstück im Anschluss an einen Arbeitshub relativ zueinander einen Rückhub ausführen, der dem Arbeitshub entgegengerichtet ist. Dabei besteht insbesondere die Möglichkeit, dass für den Funktionszustand der formgebenden Verzahnung besonders aussagekräftige Phasen des Arbeitshubs und/oder des Rückhubs definiert und überwacht werden, im Falle des Arbeitshubs beispielsweise die Phase von dem Einsetzen des Materialflusses an dem zu bearbeitenden Werkstück bis zum Ende des Arbeitshubs, insbesondere bis zur Einleitung eines sich an den Arbeitshub anschließenden Rückhubs.

Die momentanen lokalen Verzahnungskräfte werden vorzugsweise an Messstellen bestimmt, die senkrecht zu der Bewegungsbahn des von der formgebenden Verzahnung und des umzuformenden Werkstücks relativ zueinander ausgeführten Hubs gegeneinander versetzt sind. Insbesondere verteilen sich die Messstellen dabei in Umfangsrichtung um die Bewegungsbahn. Die Messvorrichtung der erfindungsgemäßen Vorrichtung weist mehrere die Messstellen an der formgebenden Verzahnung ausbildende Kraftsensoren auf, die entsprechend angeordnet sind (Patentansprüche 4, 11).

Im Fall einer bevorzugten Bauart der erfindungsgemäßen Umformmaschine sind die Messstellen beziehungsweise die Kraftsensoren an einer Werkzeugaufnahme des mit der formgebenden Verzahnung versehenen Umformwerkzeugs vorgesehen (Patentanspruch 12).

Gemäß Patentanspruch 5 werden erfindungsgemäß für jede der Messstellen an der formgebenden Verzahnung die frühere momentane lokale Verzahnungskraft und die spätere momentane lokale Verzahnungskraft vorzugsweise dadurch miteinander in Beziehung gesetzt, dass der Betrag der früheren momentanen lokalen Verzahnungskraft und der Betrag der späteren momentanen lokalen Verzahnungskraft miteinander verglichen werden.

Anhand des Vergleichsergebnisses wird in weiterer Ausgestaltung der Erfindung für jede der Messstellen an der formgebenden Verzahnung als für den Funktionszustand der formgebenden Verzahnung spezifische lokale Zustandskenngröße ein Mittelwert des Betrags der momentanen lokalen Verzahnungskraft und/oder ein Verlauf des Betrags der momentanen lokalen Verzahnungskraft über der Zeit und/oder eine mathematische Ableitung des zeitlichen Verlaufs des Betrags der momentanen lokalen Verzahnungskraft und/oder ein mathematisches Integral des zeitlichen Verlaufs des Betrags der momentanen lokalen Verzahnungskraft bestimmt (Patentanspruch 6). Vorzugsweise werden für jede der Messstellen als lokale Zustandskenngröße(n) ermittelt: der Mittelwert der Beträge der momentanen lokalen Verzahnungskraft und/oder der Mittelwert der Absolutwerte der ersten und/oder der zweiten Ableitung des zeitabhängigen Verlaufs des Betrags der momentanen lokalen Verzahnungskraft und/oder der Mittelwert der Absolutwerte des Integrals des zeitabhängigen Verlaufs des Betrags der momentanen lokalen Verzahnungskraft.

Gemäß Patentanspruch 7 wird in Weiterbildung der Erfindung anhand der den Messstellen zugeordneten lokalen Zustandskenngrößen auf den Funktionszustand der formgebenden Verzahnung geschlossen, indem für jede der Messstellen die für die Messstelle bestimmte lokale Zustandskenngröße mit einer der Messstelle zugeordneten lokalen Referenz-Zustandskenngröße verglichen und anhand des Vergleichsergebnisses auf den Funktionszustand der formgebenden Verzahnung geschlossen wird.

Insbesondere im Vorfeld des konkreten Überwachungsprozesses werden die den Messstellen zugeordneten lokalen Referenz-Zustandskenngrößen vorzugsweise empirisch ermittelt (Patentanspruch 8).

In bevorzugter Ausgestaltung der Erfindung wird zur Auswertung der für die verschiedenen Messstellen der formgebenden Verzahnung bestimmten momentanen lokalen Verzahnungskräfte ein neuronales Netz verwendet (Patentanspruch 9). In dem neuronalen Netz werden insbesondere die den verschiedenen Messstellen zugeordneten und für den Funktionszustand der formgebenden Verzahnung spezifischen lokalen Zustandskenngrößen als jeweils ein Feld eingelesen und daraufhin bewertet, in welchem Funktionszustand sich die formgebende Verzahnung befindet. Beispielsweise wird unter Nutzung des neuronalen Netzes darauf geschlossen, ob an der formgebenden Verzahnung ein Zahnbruch vorliegt und/oder ob die formgebende Verzahnung verschlissen ist. Dabei werden die für den konkreten Umformprozess bestimmten lokalen Zustandskenngrößen verglichen mit lokalen Referenz-Zustandskenngrößen. Zur Gewinnung von lokalen Referenz-Zustandskenngrößen wird (werden) bei der Umformung einer Mehrzahl von Werkstücken pro Werkstück für jede Messstelle die für den Funktionszustand der formgebenden Verzahnung spezifische(n) lokale(n) Zustandskenngröße(n) bestimmt. Dabei werden für die Messstellen beispielsweise die Mittelwerte der Beträge der momentanen lokalen Verzahnungskraft und/oder die Mittelwerte der Absolutwerte der ersten und/oder der zweiten Ableitung des zeitabhängigen Verlaufs des Betrags der momentanen lokalen Verzahnungskraft und/oder die Mittelwerte der Absolutwerte des Integrals des zeitabhängigen Verlaufs des Betrags der momentanen lokalen Verzahnungskraft bestimmt. Werden alle vier genannten lokalen Zustandskenngrößen ermittelt, so erhält man bei der Werkstückumformung je Werkstück pro Messstelle vier Mittelwerte und somit beispielsweise bei vier Messstellen in Summe 16 Mittelwerte je Werkstück.

Zum Teachen eines neuronalen Netzes werden pro Werkstück 16 Mittelwerte der genannten Art mit der Information, ob die zur Umformung des Werkstücks verwendete formgebende Verzahnung bei der Bestimmung der Mittelwerte verschlissen oder gebrochen oder neuwertig war, in einer Software eingelesen. Anhand einer ausreichend großen Anzahl an Werkstücken bzw. Daten bildet die Software ein neuronales Netz. Wichtig beim Teachen des Systems ist, dass die den einzelnen Messstellen zugeordneten lokalen Zustandskenngrößen für jede Messstelle separat als lokale Zustandskenngröße (eigenes Feld) eingelesen und nicht miteinander verrechnet werden. Das auf diese Weise angelernte neuronale Netz wird dann bei anschließenden Umformprozessen zur Bewertung des Funktionszustands der im Rahmen dieser Umformprozesse verwendeten formgebenden Verzahnungen genutzt.

Die mittels des erfindungsgemäßen Verfahrens beziehungsweise an der erfindungsgemäßen Umformmaschine gewonnenen Informationen über den Funktionszustand der formgebenden Verzahnung des Umformwerkzeugs werden in bevorzugter Ausgestaltung der erfindungsgemäßen Umformmaschine genutzt, um den Umformantrieb zu steuern, mittels dessen die formgebende Verzahnung des Umformwerkzeugs und ein umzuformendes Werkstück relativ zueinander bewegt werden (Patentanspruch 13). Beispielsweise besteht dabei die Möglichkeit, bei Erkennung eines Zahnbruchs an der formgebenden Verzahnung des Umformwerkzeugs den Umformantrieb stillzusetzen. Ergänzend oder alternativ ist es denkbar, dass eine Warnmeldung für den Maschinenbediener generiert wird, wenn ein Zahnbruch festgestellt wird und/oder wenn der überwachte Verschleiß der formgebenden Verzahnung einen bestimmten Grad erreicht hat.

Nachfolgend wird die Erfindung anhand beispielhafter schematischer Darstellungen näher erläutert.

Es zeigen:
- Figur 1: eine Umformmaschine zum rekursiven Axialformen, mit einem Umformwerkzeug und mit einer Vorrichtung zur Überwachung des Funktionszustands einer formgebenden Verzahnung des Umformwerkzeugs,
- Figur 2: das Umformwerkzeug der Umformmaschine gemäß Figur 1 in der Ansicht in Richtung des Pfeils II in Figur 1,
- Figur 3: einen exemplarischen zeitlichen Verlauf der Verzahnungskraft, welche beim rekursiven Axialformen auf die formgebende Verzahnung des Umformwerkzeugs gemäß den Figuren 1 und 2 wirkt und
- Figur 4: exemplarische zeitliche Verläufe der beim rekursiven Axialformen auf die formgebende Verzahnung des Umformwerkzeugs gemäß den Figuren 1 und 2 wirkenden Verzahnungskraft bei neuwertiger und bei verschlissener formgebender Verzahnung im Vergleich.

Beim Axialformen handelt es sich um ein Fließpressverfahren und somit um ein Umformverfahren, im Rahmen dessen ein Werkstück durch Druckbeanspruchung mittels eines Umformwerkzeugs umgeformt wird. Durch das Umformwerkzeug wird das zu bearbeitende Werkstück mit einer Presskraft beaufschlagt, die bewirkt, dass der Werkstoff des umzuformenden Werkstücks zu fließen beginnt. Mit Überschreiten der Fließgrenze des Werkstoffs setzt an dem Werkstück der eigentliche Umformprozess ein. Im Laufe des Umformprozesses wird die Form des Werkstücks in Folge eines von dem Werkstück und dem Umformwerkzeug längs einer Bewegungsbahn relativ zueinander ausgeführten Arbeitshubs in einer durch die Geometrie des Umformwerkzeugs vorgegebenen Weise geändert.

Das rekursive Axialformen stellt eine Sonderform des Axialformens dar. Die gewünschte Umformung des betreffenden Werkstücks wird beim rekursiven Axialformen nicht mit einem einzelnen kontinuierlichen Arbeitshub erzeugt sondern vielmehr durch eine Mehrzahl aufeinanderfolgender Arbeitshübe, wobei auf einen mit einer Druckbeaufschlagung des Werkstücks verbundenen Arbeitshub jeweils ein von dem Werkstück und dem Umformwerkzeug relativ zueinander in Gegenrichtung des Arbeitshubs ausgeführter Rückhub folgt, bei welchem das Umformwerkzeug von dem Werkstück abhebt.

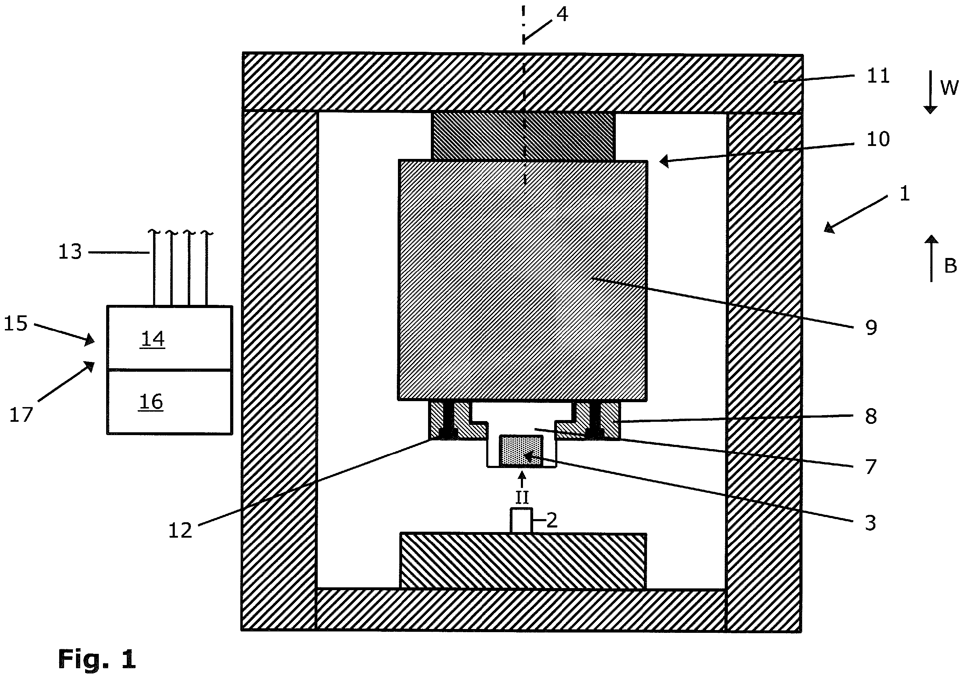

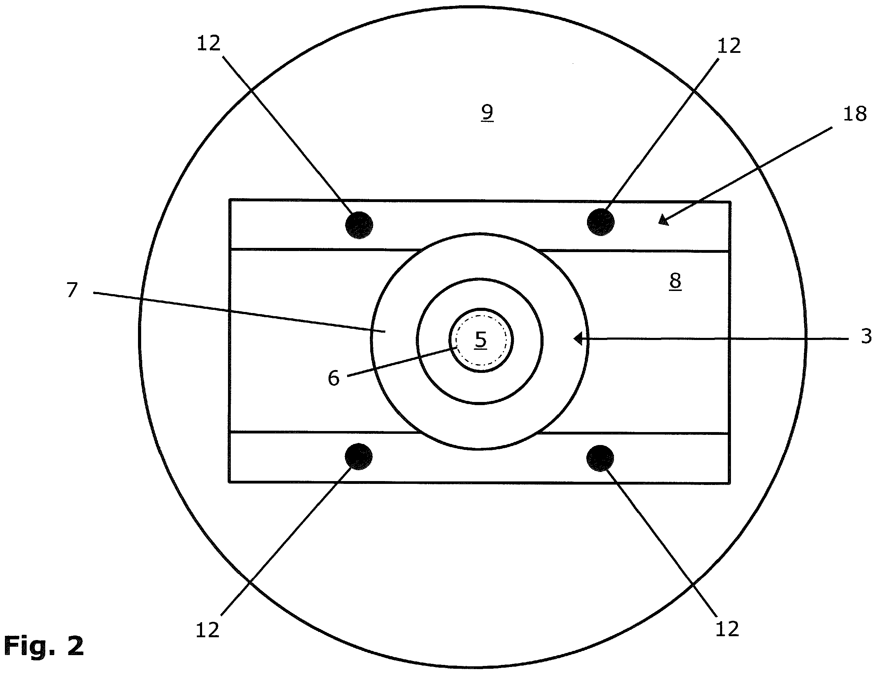

Durch rekursives Axialformen wird an einer in Figur 1 stark schematisch dargestellten Umformmaschine 1 ein umzuformendes Werkstück in Form eines Wellenrohlings 2 mittels einer als Umformwerkzeug vorgesehenen Umformmatrize 3 herkömmlicher Bauart umgeformt, im Einzelnen mit einer Außenverzahnung versehen, deren Zähne sich längs einer in Figur 1 strichpunktiert dargestellten Umformachse 4 erstrecken. Wie üblich weist die Umformmatrize 3 eine in Figur 2 erkennbare Matrizenöffnung 5 auf, deren achsparallele Wand über den gesamten Umfang mit einer formgebenden Verzahnung 6 versehen ist. Die formgebende Verzahnung 6 ist in Figur 2 durch eine strichpunktierte Kreislinie angedeutet, längs derer die Zahnspitzen der formgebenden Verzahnung 6 angeordnet sind. Die Zähne der formgebenden Verzahnung 6 verlaufen längs der Umformachse 4. In den Zahnzwischenräumen der formgebenden Verzahnung 6 wird bei dem Umformprozess die Außenverzahnung an dem Wellenrohling 2 ausgebildet.

Zur Versteifung in radialer Richtung ist die Umformmatrize 3 in bekannter Weise in eine Armierung 7 eingepasst. Über die Armierung 7 ist die Umformmatrize 3 in einer als Werkzeugaufnahme vorgesehenen Matrizenaufnahme 8 der Umformmaschine 1 fixiert. Die Matrizenaufnahme 8 wiederum ist an einem Presszylinder 9 einer als Umformantrieb vorgesehenen hydraulischen Kolben-Zylinder-Anordnung 10 angebracht. Die Kolben-Zylinder-Anordnung 10 ist an einem Pressengestell 11 der Umformmaschine 1 gelagert.

In die Matrizenaufnahme 8 sind insgesamt vier Kraftmesssensoren 12 eingebettet, die eine Messvorrichtung 18 bilden. Mittels der Kraftmesssensoren 12 wird an vier Messstellen an der Umformmatrize 3 räumlich aufgelöst die Press- beziehungsweise Verzahnungskraft gemessen, die auf die formgebende Verzahnung 6 der Umformmatrize 3 wirkt, wenn die Umformmatrize 3 beziehungsweise die formgebende Verzahnung 6 und der mit der formgebenden Verzahnung 6 in Kontakt befindliche Wellenrohling 2 relativ zueinander längs der als Bewegungsbahn vorgesehenen Umformachse 4 einen Hub (Arbeitshub oder Rückhub) ausführen. Die Kraftmesssensoren 12 und mit diesen die Messstellen sind senkrecht zu der Umformachse 4 gegeneinander versetzt um die Umformachse 4 herum angeordnet. Da die Umformmatrize 3 exakt in die Armierung 7 eingepasst und die Armierung 7 spielfrei an der Matrizenaufnahme 8 gelagert ist, können mittels der Kraftmesssensoren 12 die an der formgebenden Verzahnung 6 der Umformmatrize 3 wirkenden Press- beziehungsweise Verzahnungskräfte exakt erfasst werden.

Mittels Anschlussleitungen 13 sind die Kraftmesssensoren 12 mit einer numerischen Auswertevorrichtung 14 verbunden. Gemeinsam mit den Kraftmesssensoren 12 beziehungsweise der Messvorrichtung 18 bildet die numerische Auswertevorrichtung 14 eine Vorrichtung 15 zur Überwachung des Funktionszustands der formgebenden Verzahnung 6 an der Umformmatrize 3.

Über die numerische Auswertevorrichtung 14 ist die Vorrichtung 15 zur Überwachung des Funktionszustands der formgebenden Verzahnung 6 an eine numerische Antriebssteuerung 16 des Umformantriebs 10 der Umformmaschine 1 angebunden. Sowohl die numerische Auswertevorrichtung 14 der Vorrichtung 15 als auch die numerische Antriebssteuerung 16 des Umformantriebs 10 sind in eine numerische Maschinensteuerung 17 der Umformmaschine 1 integriert.

Zum rekursiven Axialformen des Wellenrohlings 2 wird während eines Fertigungsprozesses die Umformmatrize 3 in der eingangs beschriebenen Weise relativ zu dem auf einem Pressentisch der Umformmaschine 1 mittels eines herkömmlichen Werkstückspannsystems eingespannten Wellenrohling 2 mit abwechselnden Arbeits- und Rückhüben längs der Umformachse 4 bewegt. Aufgrund einer entsprechenden Steuerung des Umformantriebs 10 mittels der numerischen Antriebssteuerung 16 schließt sich an jeden in Richtung eines Pfeils W in Figur 1 ausgeführten Arbeitshub der Umformmatrize 3 und der formgebenden Verzahnung 6 ein Rückhub der Umformmatrize 3 und der formgebenden Verzahnung 6 in Richtung eines Pfeils B in Figur 1 an.

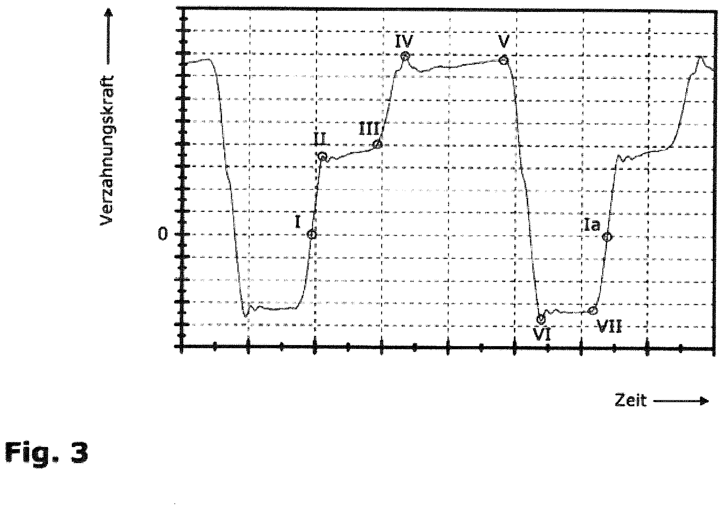

Der zeitliche Verlauf der beim rekursiven Axialformen des Wellenrohlings 2 an der formgebenden Verzahnung 6 der Umformmatrize 3 wirksamen Verzahnungskraft ist beispielhaft in Figur 3 dargestellt.

Im Anschluss an einen Rückhub der formgebenden Verzahnung 6, an dessen Ende die formgebende Verzahnung 6 über eine zuvor umgeformte Teillänge des Wellenrohlings 2 gegenüber der noch unverformten Restlänge des Wellenrohlings 2 zurückgezogen ist, gelangt in Punkt I die formgebende Verzahnung 6 erneut in Kontakt mit dem Wellenrohling 2. In Punkt III ist die formgebende Verzahnung 6 in der Richtung W des Arbeitshubs auf die noch unbearbeitete Teillänge des Wellenrohlings 2 aufgelaufen. Die an der formgebenden Verzahnung 6 bis dahin auftretende Verzahnungskraft resultiert aus der Reibung, die auftritt, wenn die formgebende Verzahnung 6 über die bereits bearbeitete Teillänge des Wellenrohlings 2 bewegt wird. Punkt II markiert dabei den Übergang von Haftzu Gleitreibung.

Ist die formgebende Verzahnung 6 in der Richtung W des Arbeitshubs auf die noch unbearbeitete Teillänge des Wellenrohlings 2 aufgelaufen (Punkt III), so wird bei fortgesetztem Arbeitshub der Wellenrohling 2 durch die formgebende Verzahnung 6 mit einer verhältnismäßig stark ansteigenden Druckkraft beaufschlagt, bis der Werkstoff des Wellenrohlings 2 zu fließen beginnt (Punkt IV).

Nach Einsetzen des Werkstoffflusses an dem Wellenrohling 2 nimmt die über die formgebende Verzahnung 6 in den Wellenrohling 2 eingeleitete Druckkraft zunächst deutlich ab. Die formgebende Verzahnung 6 bewegt sich unter Umformen des Wellenrohlings 2 an diesem entlang. Ein Schmierfilm, der von zuvor auf den Wellenrohling 2 aufgegebenem Schmiermittel zwischen der sich in Richtung W des Arbeitshubs bewegenden formgebenden Verzahnung 6 der Umformmatrize 3 einerseits und dem Wellenrohling 2 andererseits ausgebildet worden ist, baut sich mit fortschreitender Bewegung der formgebenden Verzahnung 6 allmählich ab. Mit dem Abbau des Schmierfilms geht ein Anstieg der an der formgebenden Verzahnung 6 wirksamen Verzahnungskraft einher.

Der Betrag der Verzahnungskraft an der formgebenden Verzahnung 6 erreicht schließlich in Punkt V einen zuvor definierten und in der numerischen Antriebssteuerung 16 hinterlegten Grenzwert. Bei Erreichen des Grenzwerts steuert die numerische Antriebssteuerung 16 den Umformantrieb 10 derart an, dass die Bewegung der formgebenden Verzahnung 6 in Richtung des Pfeils W des Arbeitshubs abgebrochen und die formgebende Verzahnung 6 mit einem Rückhub gegenüber dem noch unbearbeiteten Teil des Wellenrohlings 2 in Richtung des Pfeils B zurückgezogen wird. Auch bei dem Rückhub wirkt auf die formgebende Verzahnung 6 eine Reibkraft, deren Betrag in Punkt VI ein lokales Minimum erreicht. Es folgt ein Rückhubabschnitt, bei welchem auf die formgebende Verzahnung 6 eine annähernd konstante Reibkraft wirkt und dessen Ende durch Punkt VII markiert wird. Der nächste Arbeitshub der formgebenden Verzahnung 6 wird schließlich in Punkt Ia eingeleitet.

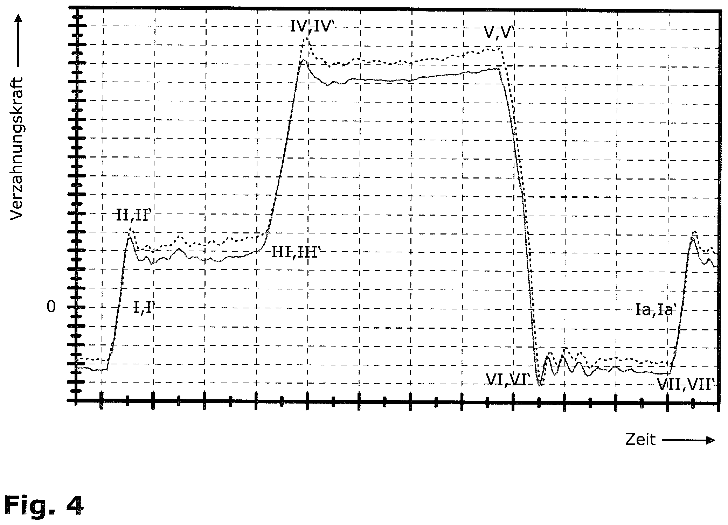

In Figur 4 ist exemplarisch der zeitliche Verlauf der an der formgebenden Verzahnung 6 der Umformmatrize 3 wirksamen Verzahnungskraft mit gestrichelten Linien bei neuwertiger und mit ausgezogenen Linien bei verschleißbehafteter formgebender Verzahnung 6 dargestellt.

Charakteristisch für den Funktionszustand der formgebenden Verzahnung 6 sind
- die Beträge der Verzahnungskräfte zwischen Punkt II, II' einerseits und Punkt III, III' andererseits,
- die Beträge der Verzahnungskräfte zwischen Punkt IV, IV' einerseits und Punkt V, V' andererseits sowie
- die Beträge der Verzahnungskräfte zwischen Punkt VI, VI' einerseits und Punkt VII, VII' andererseits.

Mittels der Messvorrichtung 18 der Vorrichtung 15 zur Überwachung des Funktionszustands der formgebenden Verzahnung 6 an der Umformmatrize 3 wird an den vier durch die Kraftmessensoren 12 definierten Messstellen die an der formgebenden Verzahnung 6 wirkende Verzahnungskraft fortlaufend gemessen. Für jede der Messstellen werden in der numerischen Auswertevorrichtung 14 der Umformmaschine 1 zeitabhängige Kraftverläufe der in den Figuren 3 und 4 dargestellten Art generiert. Die Punkte der Kraftverlaufskurven ordnen jedem Messzeitpunkt die zu diesem Messzeitpunkt für die betreffende Messstelle bestimmte momentane lokale Verzahnungskraft zu.

Aus dem Verlauf der Verzahnungskraft über der Zeit werden dann für jede der Messstellen die Punkte II, III, IV, V, VI und VII beziehungsweise die Punkte II', III', IV', V', VI' und VII' herausgegriffen und einander paarweise zugeordnet (II, III; IV, V; VI, VII; II', III'; IV', V'; VI', VII'). Für die Zeitintervalle beziehungsweise Hubabschnitte zwischen den Punkten II, II'/III, III'; IV,IV'/V,V' und VI,VI'/VII, VII' werden mittels der Auswertevorrichtung 14 für jede der Messstellen anhand der momentanen lokalen Verzahnungskräfte als spezifische lokale Zustandskenngrößen bestimmt: der Mittelwert des Betrags der momentanen lokalen Verzahnungskraft, der Mittelwert der Absolutwerte der ersten und der zweiten Ableitung des zeitabhängigen Verlaufs des Betrags der momentanen lokalen Verzahnungskraft sowie der Mittelwert des Absolutwerts des Integrals des zeitabhängigen Verlaufs des Betrags der momentanen lokalen Verzahnungskraft.

Die damit für die verschiedenen Messstellen gewonnenen lokalen Zustandskenngrößen werden einem neuronalen Netz der numerischen Auswertevorrichtung 14 jeweils als ein Feld zugeführt und mit zuvor gewonnenen lokalen Referenz-Zustandskenngrößen verglichen. Die lokalen Referenz-Zustandskenngrößen wurden zuvor durch Teachen des neuronale Netzes definiert.

Zum Teachen des neuronalen Netzes werden diesem die bei einer hinreichend großen Anzahl von Werkstückumformungen gewonnenen einschlägigen lokalen Zustandskenngrößen gemeinsam mit Informationen über den mit den gewonnenen lokalen Zustandskenngrößen jeweils verbundenen Verschleißzustand der eingesetzten formgebenden Verzahnung zugeführt. Durch den Teachvorgang wird das neuronale Netz derart konfiguriert, dass das neuronale Netz bei späteren Durchläufen mit anlässlich von Umformprozessen gewonnenen lokalen Zustandskenngrößen Entscheidungspfade wählt, die mit hoher Wahrscheinlichkeit eine zutreffende Aussage über den Verschleißzustand der bei den Umformprozessen eingesetzten formgebenden Verzahnung liefern. Eine entsprechende Software für die numerische Auswertevorrichtung 14 wird beispielsweise von der Firma IBM unter der Bezeichnung IBM SPSS Modeler angeboten.

In entsprechender Weise wird verfahren bei der Überwachung der formgebenden Verzahnung 6 auf Vorliegen eines Zahnbruchs.

## Patentansprüche

1. Fertigungsverfahren,
• im Rahmen dessen ein vorzugsweise metallisches Werkstück (2) durch Fließpressen umgeformt wird, indem eine an einem Umformwerkzeug (3) zum Umformen vorzugsweise metallischer Werkstücke (2) vorgesehene formgebende Verzahnung (6) und das mit der formgebenden Verzahnung (6) in Kontakt befindliche Werkstück (2) relativ zueinander mit einem Hub längs einer Bewegungsbahn (4) bewegt werden und
• im Rahmen dessen ein Verfahren zur Überwachung des Funktionszustands der formgebenden Verzahnung (6) durchgeführt wird, wobei während eines Hubs, welchen die formgebende Verzahnung (6) und wenigstens ein mittels der formgebenden Verzahnung (6) umzuformendes und mit der formgebenden Verzahnung (6) in Kontakt befindliches Werkstück (2) relativ zueinander längs einer Bewegungsbahn (4) ausführen, zu zeitlich gegeneinander versetzten Messzeitpunkten jeweils eine aufgrund des Hubs auf die formgebende Verzahnung (6) wirkende Verzahnungskraft gemessen wird,
**dadurch gekennzeichnet,**
**dass** die Verzahnungskraft zu zeitlich gegeneinander versetzten Messzeitpunkten jeweils an mehreren Messstellen (12) an der formgebenden Verzahnung (6) gemessen und dadurch zu jedem der Messzeitpunkte für jede der Messstellen (12) eine momentane lokale Verzahnungskraft bestimmt wird,
**dass** für jede der Messstellen (12) die zu einem früheren Messzeitpunkt bestimmte frühere momentane lokale Verzahnungskraft und die zu einem späteren Messzeitpunkt bestimmte spätere momentane lokale Verzahnungskraft miteinander in Beziehung gesetzt werden,
**dass** für jede der Messstellen (12) anhand der Beziehung zwischen der früheren momentanen lokalen Verzahnungskraft und der späteren momentanen lokalen Verzahnungskraft eine der Messstelle (12) zugeordnete und für den Funktionszustand der formgebenden Verzahnung (6) spezifische lokale Zustandskenngröße bestimmt wird und
**dass** anhand der den Messstellen (12) zugeordneten lokalen Zustandskenngrößen auf den Funktionszustand der formgebenden Verzahnung (6) geschlossen wird.

2. Verfahren nach Anspruch 1, **dadurch gekennzeichnet, dass** als Funktionszustand der formgebenden Verzahnung (6) das Vorhandensein eines Zahnbruchs an der formgebenden Verzahnung (6) und/oder der Verschleißzustand der formgebenden Verzahnung (6) überwacht wird.

3. Verfahren nach einem der vorhergehenden Ansprüche, **dadurch gekennzeichnet, dass** während eines von der formgebenden Verzahnung (6) und dem umzuformenden Werkstück (2) relativ zueinander ausgeführten Arbeitshubs und/oder während eines von der formgebenden Verzahnung (6) und dem umzuformenden Werkstück (2) im Anschluss an einen Arbeitshub in Gegenrichtung des Arbeitshubs relativ zueinander ausgeführten Rückhubs die Verzahnungskraft zu zeitlich gegeneinander versetzten Messzeitpunkten jeweils an mehreren Messstellen (12) an der formgebenden Verzahnung (6) gemessen wird.

4. Verfahren nach einem der vorhergehenden Ansprüche, **dadurch gekennzeichnet, dass** die Verzahnungskraft zu zeitlich gegeneinander versetzten Messzeitpunkten jeweils an mehrere Messstellen (12) an der formgebenden Verzahnung (6) gemessen wird, indem die Verzahnungskraft an Messstellen (12) gemessen wird, die senkrecht zu der Bewegungsbahn (4) der Relativbewegung der formgebenden Verzahnung (6) und des umzuformenden Werkstücks (2) gegeneinander versetzt sind.

5. Verfahren nach einem der vorhergehenden Ansprüche, **dadurch gekennzeichnet, dass** für jede der Messstellen (12) an der formgebenden Verzahnung (6) die frühere momentane lokale Verzahnungskraft und die spätere momentane lokale Verzahnungskraft miteinander in Beziehung gesetzt werden, indem der Betrag der früheren momentanen lokalen Verzahnungskraft und der Betrag der späteren momentanen lokalen Verzahnungskraft miteinander verglichen werden.

6. Verfahren nach Anspruch 5, **dadurch gekennzeichnet, dass** für jede der Messstellen (12) an der formgebenden Verzahnung (6) anhand des Ergebnisses des Vergleichs des Betrags der früheren momentanen lokalen Verzahnungskraft und des Betrags der späteren momentanen lokalen Verzahnungskraft als lokale Zustandskenngröße ein Mittelwert des Betrags der momentanen lokalen Verzahnungskraft und/ oder eine zeitliche Entwicklung des Betrags der momentanen lokalen Verzahnungskraft und/oder eine mathematische Ableitung der zeitlichen Entwicklung des Betrags der momentanen lokalen Verzahnungskraft und/oder ein mathematisches Integral der zeitlichen Entwicklung des Betrags der momentanen lokalen Verzahnungskraft bestimmt wird.

7. Verfahren nach einem der vorhergehenden Ansprüche, **dadurch gekennzeichnet, dass** anhand der den Messstellen (12) zugeordneten lokalen Zustandskenngrößen auf den Funktionszustand der formgebenden Verzahnung (6) geschlossen wird, indem für jede der Messstellen (12) die für die Messstelle bestimmte lokale Zustandskenngröße mit einer der Messstelle zugeordneten lokalen Referenz-Zustandskenngröße verglichen und anhand des Vergleichsergebnisses auf den Funktionszustand der formgebenden Verzahnung (6) geschlossen wird.

8. Verfahren nach Anspruch 7, **dadurch gekennzeichnet, dass** die den Messstellen zugeordneten lokalen Referenz-Zustandskenngrößen empirisch ermittelt werden.

9. Verfahren nach einem der vorhergehenden Ansprüche, **dadurch gekennzeichnet, dass** mittels eines neuronalen Netzes für jede der Messstellen (12) an der formgebenden Verzahnung (6) die frühere momentane lokale Verzahnungskraft und die spätere momentane lokale Verzahnungskraft miteinander in Beziehung gesetzt werden und/oder dass mittels eines neuronalen Netzes für jede der Messstellen (12) an der formgebenden Verzahnung (6) anhand der Beziehung zwischen der früheren momentanen lokalen Verzahnungskraft und der späteren momentanen lokalen Verzahnungskraft eine der Messstelle (12) zugeordnete und für den Funktionszustand der formgebenden Verzahnung (6) spezifische lokale Zustandskenngröße bestimmt wird und/oder dass mittels eines neuronalen Netzes anhand der lokalen Zustandskenngrößen auf den Funktionszustand der formgebenden Verzahnung (6) geschlossen wird.

10. Umformmaschine zum Umformen vorzugsweise metallischer Werkstücke durch Fließpressen, mit einem eine formgebende Verzahnung (6) aufweisenden Umformwerkzeug (3), mit einem Umformantrieb (10), welcher dazu ausgebildet ist, die formgebende Verzahnung (6) des Umformwerkzeugs (3) und ein mittels der formgebenden Verzahnung (6) umzuformendes und mit der formgebenden Verzahnung (6) in Kontakt befindliches Werkstück (2) relativ zueinander mit einem Hub längs einer Bewegungsbahn (4) zu bewegen, sowie mit einer Vorrichtung (15) zur Überwachung des Funktionszustands der formgebenden Verzahnung (6) des Umformwerkzeugs (3), wobei die Vorrichtung (15) zur Überwachung des Funktionszustands der formgebenden Verzahnung (6) des Umformwerkzeugs (3) eine Messvorrichtung (18) aufweist, die dazu ausgebildet ist, während eines Hubs, welchen die formgebende Verzahnung (6) und ein mittels der formgebenden Verzahnung (6) umzuformendes und mit der formgebenden Verzahnung (6) in Kontakt befindliches Werkstück (2) relativ zueinander längs einer Bewegungsbahn (4) ausführen, zu zeitlich gegeneinander versetzten Messzeitpunkten jeweils eine aufgrund des Hubs auf die formgebende Verzahnung (6) wirkende Verzahnungskraft zu messen, **dadurch gekennzeichnet, dass** die Messvorrichtung (18) dazu ausgebildet ist, die Verzahnungskraft zu zeitlich gegeneinander versetzten Messzeitpunkten jeweils an mehreren Messstellen (12) an der formgebenden Verzahnung (6) zu messen und dadurch zu jedem der Messzeitpunkte für jede der Messstellen (12) eine momentane lokale Verzahnungskraft zu bestimmen und **dass** eine Auswertevorrichtung (14) vorgesehen ist, welche derart konfiguriert ist, dass sie
• für jede der Messstellen (12) die zu einem früheren Messzeitpunkt bestimmte frühere momentane lokale Verzahnungskraft und die zu einem späteren Messzeitpunkt bestimmte spätere momentane lokale Verzahnungskraft miteinander in Beziehung setzt,
• für jede der Messstellen (12) anhand der Beziehung zwischen der früheren momentanen lokalen Verzahnungskraft und der späteren momentanen lokalen Verzahnungskraft eine der Messstelle (12) zugeordnete und für den Funktionszustand der formgebenden Verzahnung (6) spezifische lokale Zustandskenngröße bestimmt und
• anhand der den Messstellen (12) zugeordneten lokalen Zustandskenngrößen auf den Funktionszustand der formgebenden Verzahnung (6) schließt.

11. Umformmaschine nach Anspruch 10, **dadurch gekennzeichnet, dass** die Messvorrichtung (18) mehrere, die Messstellen (12) an der formgebenden Verzahnung (6) ausbildende Kraftsensoren aufweist, die senkrecht zu der Bewegungsbahn (4) der Relativbewegung der formgebenden Verzahnung (6) und des umzuformenden Werkstücks (2) gegeneinander versetzt sind.

12. Umformmaschine nach Anspruch 10 oder Anspruch 11, **dadurch gekennzeichnet, dass** die Messstellen (12) an der formgebenden Verzahnung (6) wenigstens zum Teil an einer Werkzeugaufnahme (8) des mit der formgebenden Verzahnung (6) versehenen Umformwerkzeugs (3) vorgesehen sind.

13. Umformmaschine nach einem der Ansprüche 10 bis 12, mit einer vorzugsweise numerischen Antriebssteuerung (16), mittels derer der Umformantrieb (10) steuerbar ist, **dadurch gekennzeichnet, dass** die Antriebssteuerung (16) des Umformantriebs (10) und die Vorrichtung (15) zur Überwachung des Funktionszustands der formgebenden Verzahnung (6) des Umformwerkzeugs (3) miteinander in Verbindung stehen und dass der Umformantrieb (10) mittels der Antriebssteuerung (16) in Abhängigkeit von dem mittels der Vorrichtung (15) zur Überwachung des Funktionszustands der formgebenden Verzahnung (6) des Umformwerkzeugs (3) ermittelten Funktionszustand der formgebenden Verzahnung (6) des Umformwerkzeugs (3) steuerbar ist.

## Claims

1. Production method,
• during which a preferably metal workpiece (2) is formed by extrusion by a shaping tooth arrangement (6), provided on a forming tool (3) for forming preferably metal workpieces (2), and the workpiece (2), which is in contact with the shaping tooth arrangement (6), being moved relative to each other with a stroke along a movement path (4) and
• during which a method for monitoring the functional state of the shaping tooth arrangement (6) is performed, wherein during a stroke which the shaping tooth arrangement (6) and at least one workpiece (2) which is intended to be formed by means of the shaping tooth arrangement (6) and which is in contact with the shaping tooth arrangement (6) carry out relative to each other along a movement path (4), at measurement times which are temporally staggered with respect to each other a tooth arrangement force which acts on the shaping tooth arrangement (6) as a result of the stroke is measured in each case,
**characterised in**
**that** the tooth arrangement force is measured at measurement times which are temporally staggered with respect to each other and, in each case, at a plurality of measurement locations (12) on the shaping tooth arrangement (6) and at each of the measurement times for each of the measurement locations (12) an instantaneous local tooth arrangement force is thereby determined,
**that** for each of the measurement locations (12) the previous instantaneous local tooth arrangement force determined at an earlier measurement time and the subsequent instantaneous local tooth arrangement force determined at a later measurement time are correlated with each other,
**that** for each of the measurement locations (12) on the basis of the relationship between the earlier instantaneous local tooth arrangement force and the subsequent instantaneous local tooth arrangement force a local state identification value which is associated with the measurement location (12) and which is specific to the functional state of the shaping tooth arrangement (6) is determined, and
**that** from the local state identification values associated with the measurement locations (12), the functional state of the shaping tooth arrangement (6) is extrapolated.

2. Method according to claim 1, **characterised in that** the presence of a tooth breakage on the shaping tooth arrangement (6) and/or the wear state of the shaping tooth arrangement (6) is monitored as a functional state of the shaping tooth arrangement (6).

3. Method according to either of the preceding claims, **characterised in that** during a working stroke which is carried out relative to each other by the shaping tooth arrangement (6) and the workpiece (2) which is intended to be formed and/or during a return stroke which is carried out relative to each other by the shaping tooth arrangement (6) and the workpiece (2) which is intended to be formed following a working stroke in the opposite direction to the working stroke, the tooth arrangement force is measured in each case at measurement times which are temporally staggered with respect to each other at a plurality of measurement locations (12) on the shaping tooth arrangement (6).

4. Method according to any one of the preceding claims, **characterised in that** the tooth arrangement force is measured in each case at measurement times which are temporally staggered with respect to each other at a plurality of measurement locations (12) on the shaping tooth arrangement (6) by the tooth arrangement force being measured at measurement locations (12) which are offset relative to each other perpendicularly to the movement path (4) of the relative movement of the shaping tooth arrangement (6) and the workpiece (2) which is intended to be formed.

5. Method according to any one of the preceding claims, **characterised in that** for each of the measurement locations (12) on the shaping tooth arrangement (6) the previous instantaneous local tooth arrangement force and the subsequent instantaneous local tooth arrangement force are correlated with each other by the value of the previous instantaneous local tooth arrangement force and the value of the subsequent instantaneous local tooth arrangement force being compared with each other.

6. Method according to claim 5, **characterised in that**, for each of the measurement locations (12) on the shaping tooth arrangement (6), on the basis of the result of the comparison of the value of the previous instantaneous local tooth arrangement force and the value of the subsequent instantaneous local tooth arrangement force as a local state identification value, a mean value of the value of the instantaneous local tooth arrangement force and/or a temporal development of the value of the instantaneous local tooth arrangement force and/or a mathematical derivative of the temporal development of the value of the instantaneous local tooth arrangement force and/or a mathematical integral of the temporal development of the value of the instantaneous local tooth arrangement force is determined.

7. Method according to any one of the preceding claims, **characterised in that**, from the local state identification values which are associated with the measurement locations (12), the functional state of the shaping tooth arrangement (6) is extrapolated by the local state identification value determined for the measurement location being compared with a local reference state identification value associated with the measurement location for each of the measurement locations (12) and, using the comparison result, the functional state of the shaping tooth arrangement (6) being extrapolated.

8. Method according to claim 7, **characterised in that** the local reference state identification values associated with the measurement locations are empirically established.

9. Method according to any one of the preceding claims, **characterised in that**, by means of a neuronal network for each of the measurement locations (12) on the shaping tooth arrangement (6), the previous instantaneous local tooth arrangement force and the subsequent instantaneous tooth arrangement force are correlated with each other and/or **in that** by means of a neuronal network for each of the measurement locations (12) on the shaping tooth arrangement (6) on the basis of the relationship between the earlier instantaneous local tooth arrangement force and the subsequent instantaneous local tooth arrangement force a local state identification value which is associated with the measurement location (12) and which is specific to the functional state of the shaping tooth arrangement (6) is determined and/or **in that** by means of a neuronal network from the local state identification values the functional state of the shaping tooth arrangement (6) is extrapolated.

10. Forming machine for forming preferably metal workpieces by extrusion, having a forming tool (3) which has a shaping tooth arrangement (6), having a forming drive (10) configured to move the shaping tooth arrangement (6) of the forming tool (3) and a workpiece (2) which is intended to be formed by means of the shaping tooth arrangement (6) and which is in contact with the shaping tooth arrangement (6) relative to each other with a stroke along a movement path (4), and having a device (15) for monitoring the functional state of the shaping tooth arrangement (6) of the forming tool (3), wherein the device (15) for monitoring the functional state of the shaping tooth arrangement (6) of the forming tool (3) has a measuring device (18) configured to measure, during a stroke which the shaping tooth arrangement (6) and a workpiece (2) which is intended to be formed by means of the shaping tooth arrangement (6) and which is in contact with the shaping tooth arrangement (6) carry out relative to each other along a movement path (4), at measurement times which are temporally staggered with respect to each other a tooth arrangement force acting in each case on the shaping tooth arrangement (6) as a result of the stroke, **characterised in**
**that** the measuring device (18) is configured to measure the tooth arrangement force at measurement times which are temporally staggered with respect to each other in each case at a plurality of measurement locations (12) on the shaping tooth arrangement (6) and to thereby determine at each of the measurement times for each of the measurement locations (12) an instantaneous local tooth arrangement force and
**that** an evaluation device (14) is provided, which is configured
• to correlate with each other, for each of the measurement locations (12), the previous instantaneous local tooth arrangement force determined at an earlier measurement time and the subsequent instantaneous local tooth arrangement force determined at a subsequent measurement time,
• to determine, for each of the measurement locations (12), on the basis of the relationship between the earlier instantaneous local tooth arrangement force and the subsequent instantaneous local tooth arrangement force a local state identification value which is associated with the measurement location (12) and which is specific to the functional state of the shaping tooth arrangement (6), and
• to extrapolate from the local state identification values associated with the measurement locations (12) the functional state of the shaping tooth arrangement (6).

11. Forming machine according to claim 10, **characterised in that** the measurement device (18) has a plurality of force sensors which form the measurement locations (12) on the shaping tooth arrangement (6) and which are offset relative to each other perpendicularly to the movement path (4) of the relative movement of the shaping tooth arrangement (6) and the workpiece (2) which is intended to be formed.

12. Forming machine according to claim 10 or claim 11, **characterised in that** the measurement locations (12) on the shaping tooth arrangement (6) are provided at least partially on a tool receiving member (8) of the forming tool (3) which is provided with the shaping tooth arrangement (6).

13. Forming machine according to any one of claims 10 to 12 , having a preferably numerical drive control (16), by means of which the forming drive (10) can be controlled, **characterised in that** the drive control (16) of the forming drive (10) and the device (15) for monitoring the functional state of the shaping tooth arrangement (6) of the forming tool (3) are connected to each other, and **in that** the forming drive (10) can be controlled by means of the drive control (16) depending on the functional state of the shaping tooth arrangement (6) of the forming tool (3), which state is established by means of the device (15) for monitoring the functional state of the shaping tooth arrangement (6) of the forming tool (3).

## Revendications

1. Procédé de fabrication,
• dans le cadre duquel une pièce (2) de préférence métallique est formée par extrusion, par le fait qu'une denture de façonnage (6) prévue sur un outil de formage (3) pour le formage de pièces (2) de préférence métalliques et la pièce (2) se trouvant en contact avec la denture de façonnage (6) sont déplacées l'une par rapport à l'autre avec une course le long d'un trajet de déplacement (4) et
• dans le cadre duquel un processus de surveillance de l'état fonctionnel de la denture de façonnage (6) est effectué, dans lequel, pendant une course qu'effectuent l'une par rapport à l'autre la denture de façonnage (6) et au moins une pièce (2) à former au moyen de la denture de façonnage (6) et se trouvant en contact avec la denture de façonnage (6) le long d'un trajet de déplacement (4), à des instants de mesure décalés dans le temps les uns par rapport aux autres, une force de denture agissant sur la denture de façonnage (6) en raison de la course est mesurée respectivement,
**caractérisé**
**en ce que** la force de denture est mesurée à des instants de mesure décalés dans le temps les uns par rapport aux autres respectivement en plusieurs points de mesure (12) sur la denture de façonnage (6) et ainsi, à chacun des instants de mesure pour chacun des points de mesure (12), une force de denture locale instantanée est déterminée, **en ce que** pour chacun des points de mesure (12), la force de denture locale instantanée antérieure déterminée à un instant de mesure antérieur et la force de denture locale instantanée ultérieure déterminée à un instant de mesure ultérieur sont mises en relation l'une avec l'autre,
**en ce que** pour chacun des points de mesure (12), sur la base de la relation entre la force de denture locale instantanée antérieure et la force de denture locale instantanée ultérieure, une grandeur caractéristique d'état locale associée au point de mesure (12) et spécifique à l'état fonctionnel de la denture de façonnage (6) est déterminée et
**en ce que**, sur la base des grandeurs caractéristiques d'état locales associées aux points de mesure (12), l'état fonctionnel de la denture de façonnage (6) est déduit.

2. Procédé selon la revendication 1, **caractérisé en ce qu'**en tant qu'état fonctionnel de la denture de façonnage (6), la présence d'une rupture de dent sur la denture de façonnage (6) et/ou l'état d'usure de la denture de façonnage (6) sont surveillés.

3. Procédé selon l'une des revendications précédentes, **caractérisé en ce que**, pendant une course de travail effectuée par la denture de façonnage (6) et la pièce (2) à former l'une par rapport à l'autre et/ou pendant une course de retour effectuée par la denture de façonnage (6) et la pièce (2) à former l'une par rapport à l'autre à la suite d'une course de travail dans le sens inverse à la course de travail, la force de denture est mesurée à des instants de mesure décalés dans le temps les uns par rapport aux autres respectivement en plusieurs points de mesure (12) sur la denture de façonnage (6).

4. Procédé selon l'une des revendications précédentes, **caractérisé en ce que** la force de denture est mesurée à des instants de mesure décalés dans le temps les uns par rapport aux autres respectivement en plusieurs points de mesure (12) sur la denture de façonnage (6), par le fait que la force de denture est mesurée en des points de mesure (12) qui sont décalés les uns par rapport aux autres perpendiculairement au trajet de déplacement (4) du déplacement relatif de la denture de façonnage (6) et de la pièce (2) à former.

5. Procédé selon l'une des revendications précédentes, **caractérisé en ce que** pour chacun des points de mesure (12) sur la denture de façonnage (6), la force de denture locale instantanée antérieure et la force de denture locale instantanée ultérieure sont mises en relation l'une avec l'autre, par le fait que la valeur absolue de la force de denture locale instantanée antérieure et la valeur absolue de la force de denture locale instantanée ultérieure sont comparées l'une à l'autre.

6. Procédé selon la revendication 5, **caractérisé en ce que** pour chacun des points de mesure (12) sur la denture de façonnage (6), sur la base du résultat de la comparaison de la valeur absolue de la force de denture locale instantanée antérieure et de la valeur absolue de la force de denture locale instantanée ultérieure, il est déterminé, en tant que grandeur caractéristique d'état locale, une valeur moyenne de la valeur absolue de la force de denture locale instantanée et/ou un développement temporel de la valeur absolue de la force de denture locale instantanée et/ou une dérivation mathématique du développement temporel de la valeur absolue de la force de denture locale instantanée et/ou une intégrale mathématique du développement temporel de la valeur absolue de la force de denture locale instantanée.

7. Procédé selon l'une des revendications précédentes, **caractérisé en ce que**, sur la base des grandeurs caractéristiques d'état locales associées aux points de mesure (12), l'état fonctionnel de la denture de façonnage (6) est déduit, par le fait que pour chacun des points de mesure (12), la grandeur caractéristique d'état locale déterminée pour le point de mesure est comparée avec une grandeur caractéristique d'état de référence locale associée au point de mesure et l'état fonctionnel de la denture de façonnage (6) est déduit sur la base du résultat de la comparaison.

8. Procédé selon la revendication 7, **caractérisé en ce que** les grandeurs caractéristiques d'état de référence locales associées aux points de mesure sont déterminées empiriquement.

9. Procédé selon l'une des revendications précédentes, **caractérisé en ce qu'**au moyen d'un réseau neuronal, pour chacun des points de mesure (12) sur la denture de façonnage (6), la force de denture locale instantanée antérieure et la force de denture locale instantanée ultérieure sont mises en relation l'une avec l'autre et/ou **en ce qu'**au moyen d'un réseau neuronal, pour chacun des points de mesure (12) sur la denture de façonnage (6), une grandeur caractéristique d'état locale associée au point de mesure (12) et spécifique à l'état fonctionnel de la denture de façonnage (6) est déterminée sur la base de la relation entre la force de denture locale instantanée antérieure et la force de denture locale instantanée ultérieure, et/ou **en ce qu'**au moyen d'un réseau neuronal, l'état fonctionnel de la denture de façonnage (6) est déduit sur la base des grandeurs caractéristiques d'état locales.

10. Machine de formage pour le formage de pièces de préférence métalliques par extrusion, comportant un outil de formage (3) comprenant une denture de façonnage (6), comportant un entraînement de formage (10), lequel est conçu pour déplacer l'une par rapport à l'autre la denture de façonnage (6) de l'outil de formage (3) et une pièce (2) à former au moyen de la denture de façonnage (6) et se trouvant en contact avec la denture de façonnage (6), avec une course le long d'un trajet de déplacement (4), et comportant un dispositif (15) de surveillance de l'état fonctionnel de la denture de façonnage (6) de l'outil de formage (3), dans lequel le dispositif (15) de surveillance de l'état fonctionnel de la denture de façonnage (6) de l'outil de formage (3) comprend un dispositif de mesure (18) qui est conçu pour, pendant une course qu'effectuent l'une par rapport à l'autre la denture de façonnage (6) et une pièce (2) à former au moyen de la denture de façonnage (6) et se trouvant en contact avec la denture de façonnage (6) le long d'un trajet de déplacement (4), mesurer à des instants de mesure décalés dans le temps les uns par rapport aux autres respectivement une force de denture agissant sur la denture de façonnage (6) en raison de la course, **caractérisé**
**en ce que** le dispositif de mesure (18) est conçu pour mesurer la force de denture à des instants de mesure décalés dans le temps les uns par rapport aux autres respectivement en plusieurs points de mesure (12) sur la denture de façonnage (6) et pour déterminer ainsi, à chacun des instants de mesure pour chacun des points de mesure (12), une force de denture locale instantanée et **en ce qu'**un dispositif d'évaluation (14) est prévu, lequel est configuré de telle sorte que
• pour chacun des points de mesure (12), il met en relation l'une avec l'autre la force de denture locale instantanée antérieure déterminée à un instant de mesure antérieur et la force de denture locale instantanée ultérieure déterminée à un instant de mesure ultérieur,
• pour chacun des points de mesure (12), il détermine, sur la base de la relation entre la force de denture locale instantanée antérieure et la force de denture locale instantanée ultérieure, une grandeur caractéristique d'état locale associée au point de mesure (12) et spécifique à l'état fonctionnel de la denture de façonnage (6) et
• sur la base des grandeurs caractéristiques d'état locales associées aux points de mesure (12), il déduit l'état fonctionnel de la denture de façonnage (6).

11. Machine de formage selon la revendication 10, **caractérisée en ce que** le dispositif de mesure (18) comprend plusieurs capteurs de force formant les points de mesure (12) sur la denture de façonnage (6), lesquels capteurs sont décalés les uns par rapport aux autres perpendiculairement au trajet de déplacement (4) du déplacement relatif de la denture de façonnage (6) et de la pièce (2) à former.

12. Machine de formage selon la revendication 10 ou la revendication 11, **caractérisée en ce que** les points de mesure (12) sur la denture de façonnage (6) sont prévus au moins en partie sur un logement d'outil (8) de l'outil de formage (3) doté de la denture de façonnage (6).

13. Machine de formage selon l'une des revendications 10 à 12, comportant une commande d'entraînement (16) de préférence numérique, au moyen de laquelle l'entraînement de formage (10) peut être commandé, **caractérisée en ce que** la commande d'entraînement (16) de l'entraînement de formage (10) et le dispositif (15) de surveillance de l'état fonctionnel de la denture de façonnage (6) de l'outil de formage (3) sont amenés en liaison l'un avec l'autre, et **en ce que** l'entraînement de formage (10) peut être commandé au moyen de la commande d'entraînement (16) en fonction de l'état fonctionnel de la denture de façonnage (6) de l'outil de formage (3), lequel état fonctionnel est déterminé au moyen du dispositif (15) de surveillance de l'état fonctionnel de la denture de façonnage (6) de l'outil de formage (3).
